(19) Europäisches Patentamt

European Patent Office

Office européen des brevets

(11) **EP 1 142 768 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(51) Int Cl.$^7$: **B60T 8/00**

(21) Anmeldenummer: **01100796.0**

(22) Anmeldetag: **15.01.2001**

(54) **Verfahren zur Vermeidung des Umkippens eines Fahrzeuges um seine Längsachse**

Method for preventing the overturning of a vehicle about its longitudinal axis

Méthode pour éviter le retournement d'un véhicule autour de son axe longitudinal

(84) Benannte Vertragsstaaten:
**DE FR GB IT NL SE**

(30) Priorität: **05.04.2000 DE 10017045**

(43) Veröffentlichungstag der Anmeldung:
**10.10.2001 Patentblatt 2001/41**

(73) Patentinhaber: **WABCO GmbH & CO. OHG**
**30453 Hannover (DE)**

(72) Erfinder:
• **Holst, Hans**
**30926 Velber (DE)**
• **Lindemann, Klaus**
**30989 Gehrden (DE)**
• **Tha, Ingo**
**30159 Hannover (DE)**

(74) Vertreter: **Schrödter, Manfred**
**WABCO GmbH & Co. OHG,**
**Postfach 91 12 62**
**30432 Hannover (DE)**

(56) Entgegenhaltungen:
EP-A- 0 919 445          EP-A- 1 104 732
WO-A-99/26812          WO-A-99/30942
WO-A-99/51475          DE-C- 19 602 879

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Vermeidung des Umkippens eines Fahrzeugs um seine Längsachse gemäß dem Oberbegriff des Patentanspruchs 1.

Ein Verfahren zur Vermeidung des Umkippens eines Fahrzeuges um seine Längsachse ist z.B. aus der DE 196 02 879 C1 bekannt.

Das bekannte Verfahren bezieht sich im wesentlichen auf die Erkennung der Gefahr des Umkippens eines Fahrzeuges, insbesondere eines aus Zugmaschine und Auflieger bestehenden Sattelzuges. Die Gefahr des Umkippens wird dort durch geringfügige Betätigung der Bremsen des Aufliegers und durch Beobachtung der Reaktion eines in dem Auflieger eingebauten Antiblockiersystems (ABS) festgestellt. Wenn das ABS während des relativ schwachen Bremseingriffs einen Regelungseingriff im Sinne einer Blockierverhinderung durchführt, dann wird dies als Indikator für eine bevorstehende Umkippgefahr des Sattelzuges interpretiert. Als Reaktion auf die Umkippgefahr wird entweder ein Warnsignal ausgegeben oder ein stärkerer Bremseingriff durchgeführt, um die Querbeschleunigung des Sattelzuges zu reduzieren.

Bei einem Verfahren zur Vermeidung des Umkippens eines Fahrzeuges ist es neben der Erkennung des richtigen Anfangszeitpunkts für einen derartigen stabilisierenden Bremseingriff ebenso wichtig, den Zeitpunkt für die Beendigung des Bremseingriffs, wenn die Umkippgefahr nicht mehr akut vorliegt, rechtzeitig und zuverlässig zu erkennen, damit das Fahrzeug nicht unnötig stark abgebremst wird.

Aus der WO 99/51475 ist ein gattungsgemäßes Verfahren zur Stabilisierung eines Fahrzeuges bekannt, vorzugsweise zur Vermeidung des Umkippens des Fahrzeuges um eine in Längsrichtung des Fahrzeuges orientierte Fahrzeugachse. Falls beim dortigen Verfahren eine die Querdynamik des Fahrzeuges beschreibende Größe größer oder gleich einem charakteristischen Wert ist, wird die Geschwindigkeit des Fahrzeuges durch Bremseneingriffe, Motoreingriffe oder Retardereingriffe auf einen vorgebbaren Geschwindigkeitswert reduziert bzw. auf dem Geschwindigkeitswert gehalten.

Der Erfindung liegt daher die Aufgabe zugrunde, ein einfaches und zuverlässiges Verfahren zur Vermeidung des Umkippens eines Fahrzeugs um seine Längsachse anzugeben, bei dem ein stabilisierender Bremseingriff zur Vermeidung des Umkippens rechtzeitig wieder beendet wird.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß der Zeitpunkt, zu dem keine Umkippgefahr mehr besteht, indirekt aus der Radlast selbst bestimmt werden kann, indem das Radverhalten des mit geringer Bremskraft beaufschlagten Rades ausgewertet wird, so daß keine weiteren Informationen z. B. über die Schwerpunkthöhe oder die tatsächlich wirkende, nur über einen Sensor exakt feststellbare Querbeschleunigung vorhanden sein muß. Hierdurch kann auf weitere Sensoren verzichtet werden, und das Verfahren ist sehr kostengünstig durch eine einfache Erweiterung des Steuerprogramms eines elektronischen Steuergerätes realisierbar.

Bei bekannten Verfahren zur Umkippvermeidung, bei denen die Räder beider Fahrzeugseiten mit etwa der gleichen relativ hohen, für die stabilisierende Abbremsung erforderlichen Bremskraft beaufschlagt werden, zeigen die geringer belasteten kurveninneren Räder erst relativ spät, d. h. bei relativ hoher Radlast, eine Verringerung des Schlupfs, was zu einem zunächst weiterhin relativ hoch berechneten Querbeschleunigungswert führt, welcher wiederum zu einer Fortführung der stabilisierenden Abbremsung führt. Ein solches relativ spätes Regelungsende wird jedoch subjektiv als unkomfortabel empfunden. Wenn das Fahrzeug dabei bis in die Nähe des Stillstands abgebremst wird, kann es sogar zu einer Verkehrsgefährdung kommen. Dagegen wird bei der vorliegenden Erfindung auf der geringer belasteten kurveninneren Fahrzeugseite eine wesentlich geringere Bremskraft aufgewandt, was zu einem früheren Wiederanlaufen der kurveninneren Räder und somit zu einem geringer berechneten Querbeschleunigungswert führt, so daß der stabilisierende Bremseingriff frühzeitig beendet werden kann.

Die Erfindung ist vorteilhaft sowohl in herkömmlichen druckluftgesteuerten Bremsanlagen für Nutzfahrzeuge als auch in Bremsanlagen mit beliebiger anderer Betätigungsenergie, wie z. B. hydraulischem Druckmittel oder auch rein elektrischer Betätigung, z. B. durch Stellmotoren einsetzbar.

Gemäß einer vorteilhaften Weiterbildung der Erfindung wird der stabilisierende Bremseingriff zur Vermeidung des Umkippens beendet, wenn die Drehgeschwindigkeit des wenigstens einen mit einer geringen Bremskraft beaufschlagten kurveninneren Rades in charakteristischer Weise ansteigt. Dies hat den Vorteil, daß für die Erkennung des Ansteigens der Radlast an dem geringer belasteten kurveninneren Rad kein gesonderter Radlast-Sensor erforderlich ist. Statt dessen kann der bei Antiblockiersystemen ohnehin vorhandene Drehgeschwindigkeitssensor verwendet werden. Ein weiterer Vorteil ist, daß bei Berechnung der Querbeschleunigung aus den Signalen der Drehgeschwindigkeitssensoren keine programmtechnischen Sondermaßnahmen zur Erkennung der nicht mehr vorhandenen Umkippgefahr erforderlich sind. Statt dessen geht die ansteigende Drehgeschwindigkeit des kurveninneren Rades in die Berechnung der Querbeschleunigung ein, welche sich daraufhin verringert, wie im folgenden noch näher erläutert wird.

Gemäß einer weiteren vorteilhaften Weiterbildung der Erfindung wird an wenigstens einem kurveninneren Rad eine Testbremsung mit relativ geringer Bremskraft zur Erkennung der Gefahr des Umkippens vorgenommen. In vorteilhafter Weise werden hierbei die ABS-Schlupfsignale wenigstens eines mit der Testbremsung beaufschlagten Rades gesperrt. Dies hat den Vorteil, daß das mit der Testbremsung beaufschlagte Rad im wesentlichen unbeeinflußt von der ABS-Funktion gebremst wird und nicht durch das ABS infolge zu hohen Schlupfs entlüftet wird und wieder Anlaufen kann. Im Gegensatz zu einer vollständigen Sperrung der ABS-Funktion hat die Unterdrükkung der ABS-Schlupfsignale den Vorteil, daß eine Blokkierverhinderung aufgrund von Beschleunigungssignalen solange aufrechterhalten wird, wie das Rad noch Bodenkontakt hat, und somit Reifenschäden wie z. B. Flachstellen vermieden werden können.

Weitere Vorteile der Erfindung sowie vorteilhafte Ausgestaltungen sind in dem nachfolgend beschriebenen Ausführungsbeispiel angegeben, welches anhand von Zeichnungen näher erläutert wird.

Es zeigen:

Fig. 1          ein Fahrzeug in einer Linkskurve in Draufsicht und

Fig. 2, 3 und 4     eine bevorzugte Ausführungsform der Erfindung in Flußdiagramm-Darstellung und

Fig. 5          die in den Fig. 2, 3 und 4 dargestellte Ausführungsform als Zeitdiagramm.

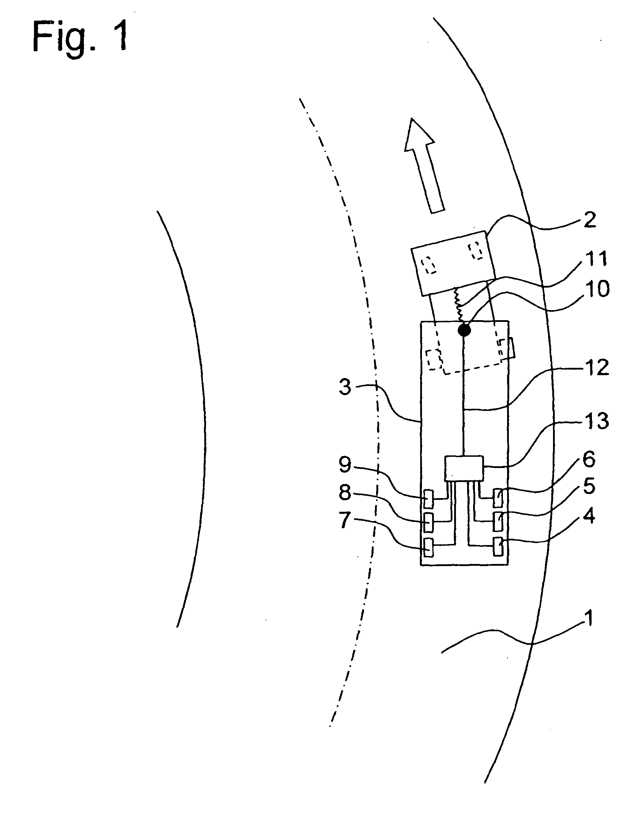

In der Fig. 1 ist ein auf einer Straße (1) in einer Linkskurve befindliches Fahrzeug (2, 3), hier bestehend aus Sattelzugmaschine (2) und Auflieger (3), in Draufsicht dargestellt. Die Erfindung ist jedoch nicht auf einen solchen Fahrzeugtyp beschränkt. Der Auflieger (3) weist eine Bremsanlage pneumatischen Typs auf, welche von der Sattelzugmaschine (2) infolge einer Bremspedalbetätigung durch den Fahrer oder infolge bestimmter Steuer- und Regelfunktionen in dem Fahrzeug mit Bremsdruck beaufschlagbar ist. Hierzu ist die Sattelzugmaschine (2) über elektrische und pneumatische Leitungen (11) mit dem Auflieger (3) verbunden.

Die Sattelzugmaschine (2) und der Auflieger (3) sind an einem Drehpunkt (10) drehbar miteinander verbunden.

Die Bremsanlage des Aufliegers (3) weist vorzugsweise elektrisch betätigbare Komponenten wie z. B. ABS-Bremsdruckmodulatoren oder auch rein elektrisch betätigbare Bremsaktuatoren auf. Die Bremsmodulatoren bzw. Bremsaktuatoren werden von einem elektronischen Steuergerät (13) gesteuert. Das Steuergerät (13) und die Bremsmodulatoren bzw. Bremsaktuatoren werden über elektrische und pneumatische Leitungen (12) mit elektrischer Energie und dem Druckmittel bzw. der Bremsenergie versorgt. Dem elektronischen Steuergerät (13) werden zudem noch Drehgeschwindigkeiten ($v_4$, $v_5$, $v_7$, $v_8$) der Räder (4, 5, 7, 8) in einer bei Antiblockiersystemen her bekannten Weise zugeführt.

Im vorliegenden Fall sind somit die Räder (4, 5, 6) die kurvenäußeren Räder des Aufliegers, und die Räder (7, 8, 9) die kurveninneren Räder.

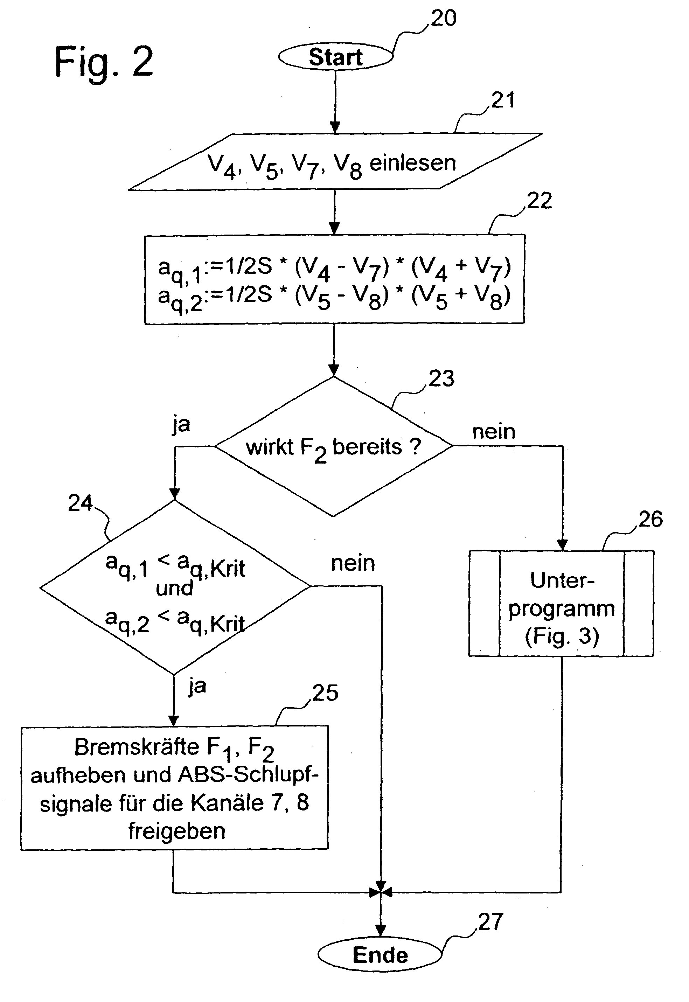

Das elektronische Steuergerät (13) führt eine Reihe von Steuerungs- und Regelungsaufgaben in dem Auflieger (3) aus. Einer dieser Steuerungs- und Regelungsaufgaben besteht darin, die Gefahr des Umkippens des Fahrzeuges (2, 3) um seine Längsachse zu erkennen und durch gezielten Bremseingriff zu verhindern, wie dies anhand der Fig. 2 mittels eines Flußdiagramms beispielhaft dargestellt wird.

Das Verfahren gemäß Fig. 2 beginnt mit einem Block (20). In einem darauffolgenden Block (21) werden die Drehgeschwindigkeiten ($v_4$, $v_5$, $v_7$, $v_8$) der Räder (4, 5, 7, 8) eingelesen. Sodann wird in einem Zuweisungsblock (22) aus den Drehgeschwindigkeiten ($v_4$, $v_7$) ein erstes Querbeschleunigungssignal ($a_{q,1}$) und aus den Drehgeschwindigkeiten ($v_5$, $v_8$) ein zweites Querbeschleunigungssignal ($a_{q,2}$) gemäß folgenden Formeln ermittelt:

$$a_{q,1} = \frac{1}{2 \cdot S} \cdot (v_4 - v_7) \cdot (v_4 + v_7) \qquad [1]$$

$$a_{q,2} = \frac{1}{2 \cdot S} \cdot (v_5 - v_8) \cdot (v_5 + v_8) \qquad [2]$$

Die Größe S stellt hierbei die Spurweite des Fahrzeugs dar. Die Querbeschleunigungssignale ($a_{q,1}$, $a_{q,2}$) werden im folgenden Verfahrensablauf gemeinsam verwendet statt eines einzigen, beispielsweise aus den Drehgeschwindigkeiten ($v_4$, $v_5$, $v_7$, $v_8$) ermittelten Querbeschleunigungssignals. Hierdurch ist das Verfahren weniger störanfällig gegenüber Signalstörungen, unterschiedlichen Reifendurchmessern und ähnlichem, so daß ein Fehlansprechen des erfindungsgemäßen Verfahrens vermieden werden kann.

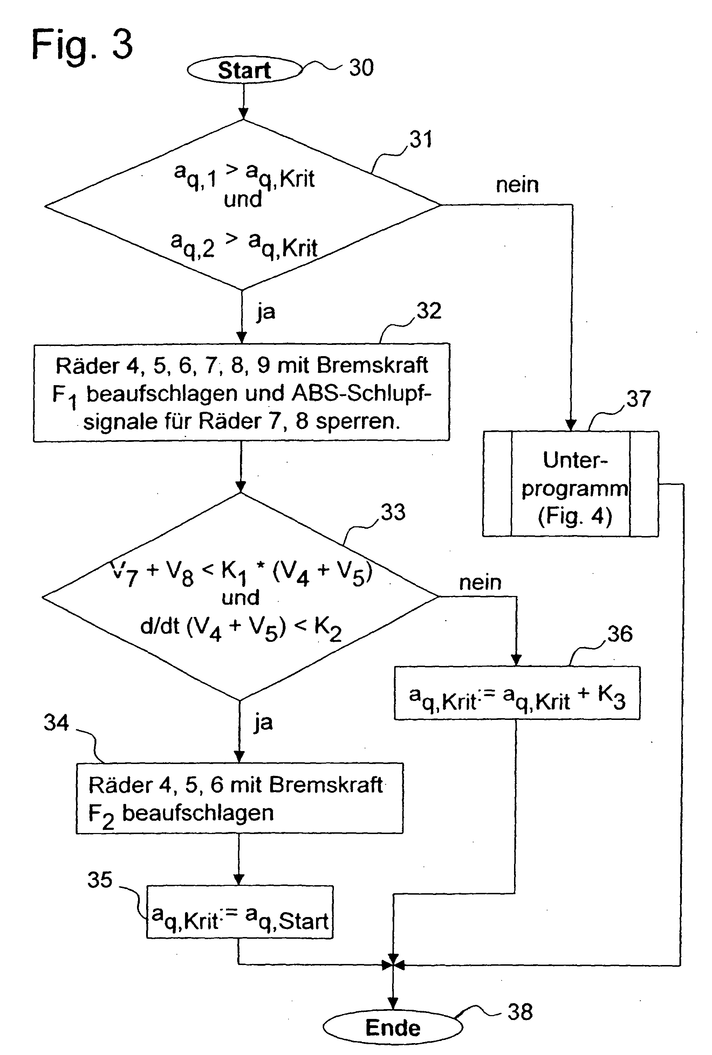

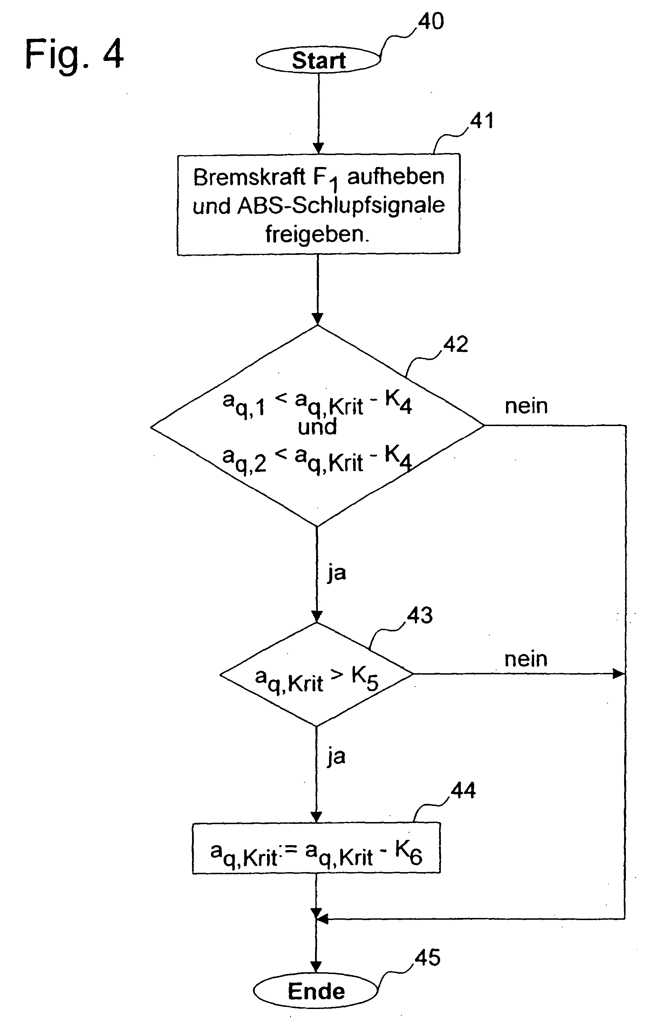

In einem Verzweigungsblock (23) wird sodann überprüft, ob die Bremsanlage bereits bei einer früheren Ausführung des in den Fig. 2, 3 und 4 dargestellten Ablaufs mit einer Bremskraft ($F_2$) zur Vermeidung des Umkippens beaufschlagt wurde. Wenn dies der Fall ist, wird unter Umgehung des nachfolgend anhand der Fig. 3 und 4 noch näher erläuterten Unterprogrammblocks (26), welcher unter anderem zur Erkennung der Umkippgefahr dient, direkt zu dem Block (24) verzweigt, wo geprüft wird, ob die Gefahr des Umkippens nicht mehr vorliegt.

Ansonsten wird mit dem in der Fig. 3 dargestellten Unterprogrammblock (26) fortgefahren, der mit einem Block (30) beginnt. In einem darauffolgenden Verzweigungsblock (31) wird überprüft, ob sowohl das erste Querbeschleunigungssignal ($a_{q,1}$) als auch das zweite Querbeschleunigungssignal ($a_{q,2}$) eine für ein Ansprechen des erfindungsgemäßen Verfahrens festgelegte Querbeschleunigungsschwelle ($a_{q,krit}$) überschreiten. Wenn dies der Fall ist, werden in einem Block (32) die Räder (4, 5, 6, 7, 8, 9) des Aufliegers (3) mit einer relativ geringen Bremskraft ($F_1$) beaufschlagt. Die Bremskraft ($F_1$) ist derart festgelegt, daß nur eine relativ geringe, für den Fahrer kaum spürbare Bremswirkung eintritt und insbesondere auch auf Fahrbahnen mit relativ hohem Reibwert kein Blockieren von Rädern auftritt, sofern keine Umkippgefahr vorliegt. In Druckluftbremsanlagen derzeit üblicher Bauart wird zur Aufbringung der Bremskraft ($F_1$) ein Bremsdruck von etwa 1 bis 2 bar eingesteuert.

Des weiteren werden in dem Block (32) die ABS-Schlupfsignale für die Räder (7, 8) gesperrt, um ein Anregeln der Antiblockierfunktion aufgrund hohen Schlupfes zu vermeiden. Ein Anregeln aufgrund von Beschleunigungssignalen ist weiterhin möglich, so daß mögliche Beschädigungen an den Reifen vermieden werden können.

In einem darauffolgenden Verzweigungsblock (33) wird nach Abklingen einer ausreichenden Einschwingzeit des Bremsdruckaufbaus bzw. des Aufbaus der Bremskraft ($F_1$) überprüft, ob die Drehgeschwindigkeiten ($v_7$, $v_8$) der kurveninneren Räder (7, 8) in charakteristischer Weise geringer sind als die Drehgeschwindigkeiten ($v_4$, $v_5$) der kurvenäußeren Räder (4, 5), während die Drehgeschwindigkeiten der kurvenäußeren Räder im wesentlichen unverändert bleiben. Ersteres wird durch Vergleich der Summe der Drehgeschwindigkeiten ($v_7$, $v_8$) der kurvenäußeren Räder mit der mit einem Faktor ($K_1$) bewerteten Summe der Drehgeschwindigkeiten ($v_4$, $v_5$) der kurveninneren Räder überprüft, Letzteres wird anhand der Summe der Verzögerungen der Räder (4, 5), d. h. der ersten zeitlichen Ableitung der zugeordneten Drehgeschwindigkeiten ($v_4$, $v_5$), überprüft. Die Überprüfung der kurvenäußeren Räder (4, 5) auf weiterhin relativ hohe Drehgeschwindigkeiten dient zur Vermeidung von Fehlansprechen des erfindungsgemäßen Verfahrens bei relativ niedrigen Reibwerten, z. B. auf Eis. Dort kann es vorkommen, daß sich nicht nur die Drehgeschwindigkeiten der kurveninneren Räder aufgrund der als Testbremsung aufgewendeten Bremskraft ($F_1$) wie beabsichtigt verringern, sondern auch die Drehgeschwindigkeiten ($v_4$, $v_5$) der höher belasteten kurvenäußeren Räder (4, 5). In diesem Fall deutet die Geschwindigkeitsverringerung der kurveninneren Räder (7, 8) nicht auf ein unmittelbar bevorstehendes Umkippen des Fahrzeugs (2, 3) hin.

Wenn die zuvor genannten Bedingungen beide erfüllt sind, ist von einer unmittelbar drohenden Umkippgefahr auszugehen. Daher werden in einem nun folgenden Block (34) die den besseren Kraftschluß zwischen Fahrbahn und Reifen aufweisenden kurvenäußeren Räder (4, 5, 6) mit einer im Verhältnis zur Bremskraft ($F_1$) hohen Bremskraft ($F_2$) beaufschlagt. Die Bremskraft ($F_2$) ist derart bemessen, daß durch eine Verringerung der Fahrzeuggeschwindigkeit die Querbeschleunigung und damit auch die Umkippgefahr umgehend verringert wird. Der physikalische Zusammenhang zwischen der Querbeschleunigung ($a_q$) des Fahrzeuges und der Fahrzeuggeschwindigkeit (v) ist durch die nachfolgend angegebene Gleichung festgelegt, wobei die Größe (R) den Kurvenradius angibt:

$$a_q = \frac{v^2}{R} \qquad [3]$$

Ein Blockieren der mit der Bremskraft ($F_2$) beaufschlagten Räder wird durch das Antiblockiersystem verhindert. Die kurveninneren Räder (7, 8, 9) sind weiterhin mit der geringen Bremskraft ($F_1$) beaufschlagt. Zur Erzeugung der Bremskraft ($F_2$) wird bei einer herkömmlichen druckluftgesteuerten Bremsanlage vorzugsweise ein Druck von 4 bis 8 bar eingesteuert.

In einem darauffolgenden Zuweisungsblock (35) wird die für das Erkennen einer Umkippgefahr und die Auslösung der Testbremsung herangezogene Querbeschleunigungsschwelle ($a_{q,krit}$) auf einen Anfangswert ($a_{q,start}$) gesetzt. Dies ist im Zusammenhang mit einer im folgenden noch näher erläuterten Ausgestaltung der Erfindung zu sehen, bei der die Querbeschleunigungsschwelle ($a_{q,krit}$) variiert werden kann.

Das Unterprogramm endet sodann mit einem Block (38).

Falls die in dem Verzweigungsblock (23) in der Fig. 2 überprüfte Bedingung zu bejahen ist, wird in der Fig. 2 in einem darauffolgenden Verzweigungsblock (24) geprüft, ob sowohl das erste Querbeschleunigungssignal ($a_{q,1}$) als auch das zweite Querbeschleunigungssignal ($a_{q,2}$) die Querbeschleunigungsschwelle ($a_{q,krit}$) unterschreiten. Wenn dies der Fall ist, liegt keine Gefahr des Umkippens mehr vor, und es können in einem nachfolgenden Block (25) die Bremskräfte ($F_1$, $F_2$) aufgehoben und die in dem Block (32) gesperrten ABS-Schlupfsignale wieder freigegeben werden. Anderenfalls wird unter Umgehung des Blockes (25) direkt zu einem Block (27) verzweigt, mit dem das Verfahren endet.

Die Funktionsweise der Erfindung und insbesondere die Verwendung der Querbeschleunigungssignale ($a_{q,1}$, $a_{q,2}$) kann wie folgt veranschaulicht werden. Die bei Umkippgefahr mit geringer Radlast beaufschlagten kurveninneren Räder (7, 8, 9) tendieren zu einer Verringerung der Drehgeschwindigkeit infolge der Bremskraft ($F_1$) der Testbremsung. Dies bewirkt wiederum eine relativ große Drehgeschwindigkeitsdifferenz zwischen den kurveninneren und den kurvenäußeren Rädern. Diese führt bei Anwendung der Gleichungen [1] und [2] zu einem rapiden Anstieg der ersten und der zweiten Querbeschleunigungssignale ($a_{q,1}$, $a_{q,2}$). Im umgekehrten Fall führt das Wiederaufsetzen der kurveninneren Räder (7, 8, 9), z. B. infolge der Abbremsung mit der Bremskraft ($F_2$) in dem Block (34), dazu, daß die berechneten Querbeschleunigungssignale ($a_{q,1}$, $a_{q,2}$) sich rapide verringern. Wegen der rapiden Veränderung der Querbeschleunigungssignale kann die Testbremsung, welche die mit geringer Radlast behafteten bzw. in der Luft befindlichen Räder bei Umkippgefahr zum Stillstand bringt, für eine sichere Erkennung des Wiederaufsetzens der Räder bzw. der Beendigung der Umkippgefahr benutzt werden, da die kurveninneren Räder dann aufgrund der sich erhöhenden Radlast trotz der durch die Bremskraft ($F_1$) bewirkten Bremswirkung wieder anlaufen, was zu einem charakteristischen Anstieg der Drehgeschwindigkeiten ($v_7$, $v_8$) dieser Räder führt.

Falls in der Fig. 3 eine oder beide der in dem Verzweigungsblock (33) überprüften Bedingungen nicht erfüllt ist, so wird unter Ausführung des Zuweisungsblocks (36), in welchem die Querbeschleunigungsschwelle ($a_{q,krit}$) um den Wert ($K_3$) erhöht wird, zu dem Block (38) verzweigt, mit dem das Verfahren endet. Der Block (36) ist ebenso wie der Block (35) sowie der noch nicht erwähnte Unterprogrammblock (37) Bestandteil einer im folgenden noch näher erläuterten Ausgestaltung der Erfindung.

Wenn eine oder beide der in dem Verzweigungsblock (31) überprüften Bedingungen nicht erfüllt sind, dann wird zu dem Unterprogrammblock (37) verzweigt, der anhand der Fig. 4 näher erläutert werden soll.

Der Unterprogrammblock (37) beginnt gemäß Fig. 4 mit einem Block (40). In einem darauffolgenden Block (41) wird die Bremskraft ($F_1$) wieder aufgehoben und somit die Testbremsung beendet. Dort werden außerdem die in dem Block (32) gesperrten ABS-Schlupfsignale wieder freigegeben. Sodann wird mit einem Verzweigungsblock (42) fortgefahren, wo überprüft wird, ob die in dem Verzweigungsblock (24) geprüfte Bedingung zur Beendigung des stabilisierenden Bremseingriffs um ein bestimmtes Maß ($K_4$) unterschritten wird, d. h. ob jedes der Querbeschleunigungssignale ($a_{q,1}$, $a_{q,2}$) die Querbeschleunigungsschwelle ($a_{q,krit}$) um das Maß ($K_4$) unterschreitet. Wenn dies der Fall ist, dann ist das Fahrzeug (2, 3) relativ weit von einer Umkippgefahr entfernt, und es kann die in dem Block (36) stufenweise erhöhte Querbeschleunigungsschwelle ($a_{q,krit}$) verringert werden, ohne daß mit einem Fehlansprechen der Maßnahmen zur Umkippverhinderung zu rechnen ist. Die Verringerung der Querbeschleunigungsschwelle ($a_{q,krit}$) soll jedoch nur bis einem bestimmten Mindestwert ($K_5$) erfolgen, welcher in Abhängigkeit von den Fahrzeugdaten festzulegen ist.

Diese Bedingung wird in dem Verzweigungsblock (43) abgefragt. Bei Erfüllung der Bedingung wird in dem nachfolgenden Zuweisungsblock (44) die Querbeschleunigungsschwelle ($a_{q,krit}$) um einen Schritt ($K_6$) verringert. Daraufhin endet das Verfahren mit dem Block (45). Bei negativem Überprüfungsergebnis in einer der Blöcke (42, 43) endet das Verfahren ebenfalls mit dem Block (45).

Der Anfangswert ($a_{q,start}$) der Querbeschleunigungsschwelle ($a_{q,krit}$) kann beispielsweise über einen in einem nichtflüchtigen Speicher abgelegten Parameter fahrzeugabhängig festgelegt werden. In einer vorteilhaften Ausgestaltung der Erfindung wird er abhängig von der Beladung des Fahrzeuges, die z. B. über eine Messung des Drucks in den Luftfederbälgen eines mit Luftfederung ausgestatteten Fahrzeugs ermittelt wird, festgelegt.

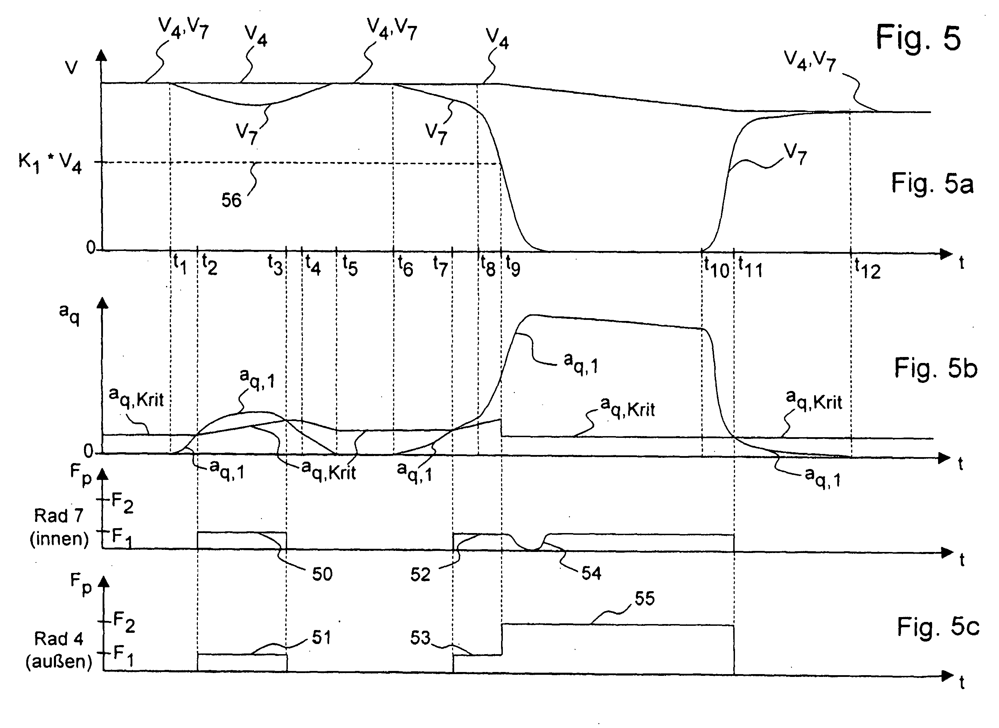

In der Fig. 5 sind anhand zweier typischer Anwendungsfälle des erfindungsgemäßen Verfahrens, nämlich einer Kurvenfahrt ohne Umkippgefahr und einer Kurvenfahrt mit Umkippgefahr, die Signalverläufe der zuvor erläuterten Größen im Zeitdiagramm dargestellt, wobei die Geschwindigkeitswerte gemeinsam in einem Geschwindigkeitsdiagramm (Fig. 5a), die Querbeschleunigungswerte gemeinsam in einem Querbeschleunigungsdiagramm (Fig. 5b) und die Bremskräfte (F) bzw. Bremsdrücke (p) getrennt nach linker und rechter Fahrzeugseite in einem eigenen Diagramm (Fig. 5c) dargestellt. Zur Vereinfachung der Darstellung werden in der Fig. 5 nur die Drehgeschwindigkeitssignale ($v_4$, $v_7$) der hintersten Achse des Aufliegers (3) betrachtet sowie die daraus abgeleiteten Signale ($a_{q,1}$, $a_{q,krit}$). Das erfindungsgemäße Verfahren ist im übrigen auch für Fahrzeuge mit nur einer Achse bzw. mit nur einer mit Drehgeschwindigkeitssensoren bestückten Achse geeignet.

Beginnend mit dem Zeitpunkt (t=0) befindet sich das Fahrzeug (2, 3) in Geradeausfahrt mit einer für die Fahrzeugart üblichen Geschwindigkeit. Zu dieser Zeit weisen die Drehgeschwindigkeiten ($v_4$, $v_7$) den gleichen Wert auf, und das Querbeschleunigungssignal ($a_{q,1}$) hat den Wert 0. Zum Zeitpunkt ($t_1$) beginnt das Fahrzeug (2, 3), eine Linkskurve zu fahren, wie in der Fig. 1 schematisch dargestellt. Hierbei verringert sich die Drehgeschwindigkeit ($v_7$) des kurveninneren Rades (7) in wesentlich stärkerer Weise als die Drehgeschwindigkeit ($v_4$) des kurvenäußeren Rades (4), bei welchem durch den Nachlauf des Aufliegers (3) eine relativ schwache Verringerung der Drehgeschwindigkeit ($v_4$) hervorgerufen wird. Diese Verringerung der Drehgeschwindigkeit ($v_4$) ist in der der Darstellung gemäß Fig. 5 aber vernachlässigt, so daß die Drehgeschwindigkeit ($v_4$) hierbei als konstanter Wert dargestellt ist.

Infolge des Unterschiedes zwischen den Drehgeschwindigkeiten ($v_4$, $v_7$) steigt das Querbeschleunigungssignal ($a_{q,1}$) an und erreicht zu dem Zeitpunkt ($t_2$) die Querbeschleunigungsschwelle ($a_{q,krit}$). Hierdurch wird die Testbremsung an allen Rädern (4, 5, 6, 7, 8, 9) des Aufliegers (3) ausgelöst, was in der Fig. 5c durch einen Anstieg der Bremskraft (F) auf den Wert ($F_1$) dargestellt ist (Signale 50, 51). Des weiteren wird die Querbeschleunigungsschwelle ($a_{q,krit}$) bei jeder Ausführung des erfindungsgemäßen Verfahrens gemäß Fig. 2 bis 4, also z. B. in Abständen von 10 ms, um den Wert ($K_3$) feinstufig vergrößert, was zu dem in der Fig. 5b dargestellten rampenförmigen Anstieg führt. Zu dem Zeitpunkt ($t_3$) unterschreitet das Querbeschleunigungssignal ($a_{q,1}$) die Querbeschleunigungsschwelle ($a_{q,krit}$), was zu einer Beendigung der Testbremsung führt. Die in dem Zeitraum zwischen den Zeitpunkten ($t_2$, $t_3$) er-

höhte Querbeschleunigungsschwelle ($a_{q,krit}$) wird zunächst beibehalten, da in diesem Zeitraum keine ernsthafte Umkippgefahr gemäß den Kriterien des Verzweigungsblocks (33) erkannt wurde und somit auch die erhöhte Querbeschleunigungsschwelle ($a_{q,krit}$) unter Sicherheitsaspekten tragbar ist, da davon auszugehen ist, daß der wahre Wert der bei Umkippgefahr auftretenden, kritischen Querbeschleunigung höher ist als die bei Fahrzeugstart angenommene Querbeschleunigungsschwelle ($a_{q,start}$).

Ab dem Zeitpunkt ($t_4$) ist dann die in dem Block (42) genannte Bedingung erfüllt, d.h. das Querbeschleunigungssignal ($a_{q,1}$) unterschreitet die Querbeschleunigungsschwelle ($a_{q,krit}$) um das Maß ($K_4$). Daher wird, solange die Querbeschleunigungsschwelle ($a_{q,krit}$) einen größeren Wert aufweist als den im Block (43) überprüften Mindestwert ($K_5$), die Querbeschleunigungsschwelle ($a_{q,krit}$) feinstufig verringert. Dies ist in der Fig. 5b anhand des rampenförmigen Verlaufs zwischen den Zeitpunkten ($t_4$, $t_5$) dargestellt. Zu dem Zeitpunkt ($t_5$) hat die Querbeschleunigungsschwelle ($a_{q,krit}$) dann den Mindestwert ($K_5$) erreicht, so daß die in dem Block (43) überprüfte Bedingung nicht mehr erfüllt ist und die Querbeschleunigungsschwelle ($a_{q,krit}$) auf dem Mindestwert ($K_5$) verharrt. Insofern wird bei der in den Blöcken (35, 36, 42, 43, 44) der Fig. 3 und 4 angegebenen Ausgestaltung des erfindungsgemäßen Verfahrens die Querbeschleunigungsschwelle ($a_{q,krit}$) nach Art einer selbstlernenden Funktion an die realen Verhältnisse adaptiert.

Das Fahrzeug (2, 3) hat nun seine Kurvenfahrt zunächst beendet, was zu einer Angleichung der Drehgeschwindigkeiten ($v_4$, $v_7$) aneinander und zu einem Rückgang des Querbeschleunigungssignals ($a_{q,1}$) auf den Wert 0 führt. Zu dem Zeitpunkt ($t_6$) beginnt eine weitere Kurvenfahrt in einer Linkskurve, anhand derer die Erkennung und Vermeidung des Umkippens des Fahrzeuges (2, 3) erläutert werden soll. Ab dem Zeitpunkt ($t_6$) verringert sich die Drehgeschwindigkeit ($v_7$) des kurveninneren Rades (7), während die Drehgeschwindigkeit ($v_4$) des kurvenäußeren Rades (4) aus den zuvor bereits erläuterten Gründen im wesentlichen konstant bleibt. Zu dem Zeitpunkt ($t_7$) überschreitet das Querbeschleunigungssignal ($a_{q,1}$) die Querbeschleunigungsschwelle ($a_{q,krit}$), woraufhin wiederum die Testbremsung ausgelöst wird (Signale 52, 53 in Fig. 5c) und die Querbeschleunigungsschwelle ($a_{q,krit}$) rampenartig wiederum erhöht wird. Etwa zu dem Zeitpunkt ($t_8$) ist die Radlast des Rades (7) derart reduziert, daß die durch die Testbremsung aufgebrachte Bremskraft ($F_1$) ausreicht, das Rad (7) derart zu bremsen, daß sich die Drehgeschwindigkeit ($v_7$) rapide verringert, wie in der Darstellung gemäß Fig. 5a erkennbar ist. Die rapide Verringerung der Drehgeschwindigkeit ($v_7$) bewirkt außerdem kurz nach dem Zeitpunkt ($t_9$) infolge eines Ansprechens der Antiblockier-Funktion eine kurzzeitige Verringerung (54) der auf das Rad (7) einwirkenden Bremskraft.

Zu dem Zeitpunkt ($t_9$) sind die in dem Verzweigungsblock (33) aufgeführten Kriterien erfüllt, wobei angenommen wird, daß $K_1$ im vorliegenden Beispiel den Wert 0,5 aufweist (gestrichelte Linie 56). Es besteht somit Umkippgefahr. Ab dem Zeitpunkt ($t_9$) wird daher das kurvenäußere Rad (4) sowie die übrigen kurvenäußeren Räder (5, 6) mit der höheren Bremskraft ($F_2$) beaufschlagt (Signal 55 in der Fig. 5c). Infolge der Bremskraftbeaufschlagung verringert das Fahrzeug (2, 3) seine Geschwindigkeit, was in der Fig. 5a an dem abfallenden Verlauf der Drehgeschwindigkeit ($v_4$) erkennbar ist.

Zu dem Zeitpunkt ($t_9$) wird außerdem die Querbeschleunigungsschwelle ($a_{q,krit}$) wieder auf den Anfangswert ($a_{q,start}$) zurückgesetzt (Block 35 in Fig. 3).

Infolge der rapiden Verringerung der Drehgeschwindigkeit ($v_7$) erhöht sich das gemäß Gleichung [1] berechnete Querbeschleunigungssignal ($a_{q,1}$) bis zu einem Maximalwert, der erreicht wird, wenn die Drehgeschwindigkeit ($v_7$) den Wert 0 erreicht. Infolge der Verringerung der Fahrzeuggeschwindigkeit und der damit einhergehenden Verringerung der Drehgeschwindigkeit ($v_4$) verringert sich auch das berechnete Querbeschleunigungssignal ($a_{q,1}$).

Zu dem Zeitpunkt ($t_{10}$) beginnt das Rad (7) wieder eine Drehbewegung auszuführen, was in der Folge zu einem charakteristischen Anstieg der Drehgeschwindigkeit ($v_7$) führt. Das gemäß Gleichung [1] berechnete Querbeschleunigungssignal ($a_{q,1}$) unterschreitet dann zu einem Zeitpunkt ($t_{11}$) die bereits zu dem Zeitpunkt ($t_9$) wieder auf den Anfangswert ($a_{q,start}$) zurückgesetzte Querbeschleunigungsschwelle ($a_{q,krit}$), was zu einer sofortigen Beendigung des Bremseingriffs führt. Ab dem Zeitpunkt ($t_{12}$) befindet sich das Fahrzeug dann wieder in Geradeausfahrt.

Für die Größen ($K_1$, $K_2$, $K_3$, $K_4$, $K_5$, $K_6$, $a_{q,start}$) werden in vorteilhafter Weise folgende Werte verwendet:

$K_1 = 0,5$
$K_2 = 5 \text{ m/s}^2$
$K_3 = 0,01 \text{ m/s}^2$
$K_4 = 1 \text{ m/s}^2$
$K_5 = 5 \text{ m/s}^2$
$K_6 = 0,01 \text{ m/s}^2$ pro Sekunde
$a_{q,start} = 3 \text{ m/s}^2$

**Patentansprüche**

1. Verfahren zur Vermeidung des Umkippens eines Fahrzeuges (2, 3) um seine Längsachse, bei dem ein die Gefahr des Umkippens anzeigender Indikator ausgewertet wird und bei drohender Gefahr des Umkippens automatisch eine Bremsung eingeleitet wird, indem wenigstens ein Rad (4, 5, 6, 7, 8, 9) des Fahrzeuges (2, 3) mit Bremskraft beaufschlagt wird, wobei wenigstens ein kurvenäußeres Rad (4, 5, 6) mit einer für eine Vermeidung des Umkippens ausreichenden Bremskraft ($F_2$) beaufschlagt wird,

während wenigstens ein kurveninneres Rad (7, 8, 9) mit einer im Verhältnis zur der an dem kurvenäußeren Rad (4, 5, 6) aufgewendeten Bremskraft ($F_2$) geringen Bremskraft ($F_1$) beaufschlagt wird, **dadurch gekennzeichnet, daß** die automatische Bremsung zur Vermeidung des Umkippens beendet wird, wenn die Drehgeschwindigkeit ($v_7$, $v_8$) des wenigstens einen mit einer geringen Bremskraft ($F_1$) beaufschlagten kurveninneren Rades (7, 8) in charakteristischer Weise ansteigt.

2. Verfahren nach Anspruch 1, **dadurch gekennzeichnet, daß** die Querbeschleunigung ($a_{q,1}$, $a_{q,2}$) des Fahrzeuges (2, 3) ermittelt wird und die Überschreitung eines vorbestimmten Wertes ($a_{q,krit}$) der Querbeschleunigung ($a_{q,1}$, $a_{q,2}$) als ein Indikator für die Gefahr des Umkippens des Fahrzeuges (2, 3) verwendet wird.

3. Verfahren nach einem der vorhergehenden Ansprüche, **dadurch gekennzeichnet, daß** zur Erkennung der Gefahr des Umkippens als Testbremsung wenigstens ein kurveninneres Rad (7, 8, 9) mit einer im Verhältnis zur höchstmöglichen Bremskraft geringen Bremskraft ($F_1$) beaufschlagt wird, und daß eine charakteristische Verringerung der Drehgeschwindigkeit ($v_7$, $v_8$) wenigstens eines mit der Testbremsung beaufschlagten kurveninneren Rades (7, 8) als ein Indikator für die Gefahr des Umkippens des Fahrzeuges (2, 3) verwendet wird.

4. Verfahren nach Anspruch 3, **dadurch gekennzeichnet, daß** zur Erkennung der Gefahr des Umkippens geprüft wird, ob die Drehgeschwindigkeiten ($v_4$, $v_5$) der kurvenäußeren Räder (4, 5) im wesentlichen unverändert bleiben.

5. Verfahren nach Anspruch 3 oder 4, **dadurch gekennzeichnet, daß** die ABS-Schlupfsignale wenigstens eines kurveninneren Rades (7, 8) gesperrt werden.

6. Verfahren nach einem der Ansprüche 3 bis 5, **dadurch gekennzeichnet, daß** der vorbestimmte Wert der Querbeschleunigung ($a_{q,krit}$) in Abhängigkeit von der Reaktion des Fahrzeuges (2, 3) auf die Testbremsung und/oder in Abhängigkeit der aktuellen Querbeschleunigung ($a_{q,1}$, $a_{q,2}$) variiert wird.

7. Verfahren nach einem der Ansprüche 3 bis 6, **dadurch gekennzeichnet, daß** die Testbremsung nur bei Überschreitung des vorbestimmten Werts ($a_{q,krit}$) der Querbeschleunigung ($a_{q,1}$, $a_{q,2}$) ausgelöst wird.

8. Verfahren nach einem der Ansprüche 2 bis 7, **dadurch gekennzeichnet, daß** für die Beurteilung der Querbeschleunigung wenigstens zwei Querbeschleunigungssignale ($a_{q,1}$, $a_{q,2}$) aus verschiedenen Sensorsignalen ($v_4$, $v_5$, $v_7$, $v_8$) bestimmt werden, und daß die Querbeschleunigungssignale ($a_{q,1}$, $a_{q,2}$) zur gegenseitigen Stützung und/oder zur Plausibilitätskontrolle verwendet werden.

**Claims**

1. Method of avoiding the tipping over of a vehicle (2, 3) about its longitudinal axis, in which method an indicator that shows the risk of tipping over is evaluated and, when there is an imminent risk of tipping over, braking is automatically introduced, in which method at least one wheel (4, 5, 6, 7, 8, 9) of the vehicle (2, 3) is acted upon by a braking force, at least one wheel (4, 5, 6) on the outer side relative to the curve being acted upon by a braking force ($F_2$) that is sufficient to avoid tipping over, whilst at least one wheel (7, 8, 9) that is on the inside relative to the curve is acted upon by a braking force ($F_1$) that is small in relation to the braking force ($F_2$) applied on the wheel (4, 5, 6) on the outer side relative to the curve, **characterized in that** the automatic braking to avoid tipping over is terminated when the speed of rotation ($v_7$, $v_8$) of the at least one wheel (7, 8) on the inside relative to the curve that is being acted upon by a small braking force ($F_1$) rises in characteristic manner.

2. Method according to claim 1, **characterized in that** the transverse acceleration ($a_{q,1}$, $a_{q,2}$) of the vehicle (2, 3) is detected and the exceeding of a predetermined value ($a_{q,crit}$) for the transverse acceleration ($a_{q,1}$, $a_{q,2}$) is used as an indicator of the risk of the vehicle (2, 3) tipping over.

3. Method according to any one of the preceding claims, **characterized in that**, in order to detect the risk of tipping over, as test braking at least one wheel (7, 8, 9) on the inside relative to the curve is acted upon by a braking force ($F_1$) that is small in relation to the highest possible braking force, and a characteristic reduction in the speed of rotation ($v_7$, $v_8$) of at least one wheel (7, 8) on the inside relative to the curve that is being acted upon by the test braking is used as an indicator of the risk of the vehicle (2, 3) tipping over.

4. Method according to claim 3, **characterized in that**, in order to detect the risk of tipping over, a check is carried out as to whether the speeds of rotation ($v_4$, $v_5$) of the wheels (4, 5) on the outer side relative to the curve remain substantially unchanged.

5. Method according to claim 3 or claim 4, **characterized in that** the ABS slip signals of at least one wheel (7, 8) on the inside relative to the curve are blocked.

6. Method according to any one of claims 3 to 5, **characterized in that** the predetermined value for the transverse acceleration ($a_{q,crit}$) is varied in dependence upon the reaction of the vehide (2, 3) to the test braking and/or in dependence upon the current transverse acceleration ($a_{q,1}$, $a_{q,2}$).

7. Method according to any one of claims 3 to 6, **characterized in that** the test braking is triggered only when the predetermined value ($a_{q,crit}$) for the transverse acceleration ($a_{q,1}$, $a_{q,2}$) has been exceeded.

8. Method according to any one of claims 2 to 7, **characterized in that**, in order to assess the transverse acceleration, at least two transverse acceleration signals ($a_{q,1}$, $a_{q,2}$) from different sensor signals ($v_4$, $v_5$, $v_7$, $v_8$) are detected and the transverse acceleration signals ($a_{q,1}$, $a_{q,2}$) are used to support one another and/or to monitor plausibility.

## Revendications

1. Procédé pour éviter le retournement d'un véhicule (2, 3) autour de son axe longitudinal, selon lequel on évalue un indicateur, qui indique le risque de retournement, est évalué et, dans le cas d'un risque imminent de retournement, un système de freinage est déclenché automatiquement par le fait qu'au moins une roue (4, 5, 6, 7, 8, 9) du véhicule (2, 3) est chargée par une force de freinage, selon lequel au moins une roue (4, 5, 6) située sur le côté extérieur de la courbe est chargée avec une force de freinage ($F_2$) qui suffit pour éviter le retournement, tandis qu'au moins une roue (7, 8, 9) située sur le côté intérieur de la courbe est chargée par une force de freinage ($F_1$) faible par rapport à la force de freinage ($F_2$) appliquée à la roue (4, 5, 6) située sur le côté extérieur de la courbe, **caractérisé en ce que** le freinage automatique pour éviter le retournement est arrêté lorsque la vitesse de rotation ($v_7$, $v_8$) de la au moins une roue (7, 8) située sur le côté intérieur de la courbe, chargée par une faible force de freinage ($F_1$) augmente de façon caractéristique.

2. Procédé selon la revendication 1, **caractérisé en ce que** l'accélération transversale ($a_{q,1}$, $a_{q,2}$) du véhicule (2, 3) est déterminée et le dépassement d'une valeur prédéterminée ($a_{q,krit}$) de l'accélération transversale ($a_{q,1}$, $a_{q,2}$) est utilisé en tant qu'indicateur du risque de retournement du véhicule (2, 3).

3. Procédé selon l'une des revendications précédentes, **caractérisé en ce que** pour l'identification du risque de retournement, en tant que freinage de test on charge une roue (7, 8, 9) située sur le côté intérieur de la courbe avec une force de freinage ($F_1$), qui est faible par rapport à la force de freinage maximale possible, et qu'une réduction caractéristique de la vitesse de rotation ($v_7$, $v_8$) d'au moins une roue (7, 8) située sur le côté intérieur de la courbe et chargée par le freinage de test, est utilisé en tant qu'indicateur du risque de retournement du véhicule (2, 3).

4. Procédé selon la revendication 3, **caractérisé en ce que** pour l'identification du risque du retournement une vérification est faite pour savoir si les vitesses de rotation ($v_4$, $v_5$) des roues (4, 5) situées à l'extérieur de la courbe restent sensiblement inchangées.

5. Procédé selon la revendication 3 ou 4, **caractérisé en ce que** les signaux de glissement ABS d'au moins une roue (7, 8) située sur le côté intérieur de la courbe sont bloqués.

6. Procédé selon l'une des revendications 3 à 5, **caractérisé en ce que** la valeur prédéterminée de l'accélération transversale ($a_{q,krit}$) est modifiée en fonction de la réaction du véhicule (2, 3) au freinage de test et/ou en fonction de l'accélération transversale actuelle ($a_{q,1}$, $a_{q,2}$).

7. Procédé selon l'une des revendications 3 à 6, **caractérisé en ce que** le freinage de test est déclenché uniquement dans le cas du dépassement de la valeur prédéterminée ($a_{q,krit}$) de l'accélération transversale ($a_{q,1}$, $a_{q,2}$).

8. Procédé selon l'une des revendications 2 à 7, **caractérisé en ce que** pour l'évaluation de l'accélération transversale, au moins deux signaux d'accélération transversale ($a_{q,1}$, $a_{q,2}$) sont déterminés à partir de différents signaux ($v_4$, $v_5$, $v_7$, $v_8$) de capteurs et que les signaux d'accélération transversale ($a_{q,1}$, $a_{q,2}$) sont utilisés pour une assistance réciproque et/ou le contrôle de vraisemblance.

# Fig. 1

# Fig. 2

Start — 20

$V_4$, $V_5$, $V_7$, $V_8$ einlesen — 21

22
$$a_{q,1} := 1/2S * (V_4 - V_7) * (V_4 + V_7)$$
$$a_{q,2} := 1/2S * (V_5 - V_8) * (V_5 + V_8)$$

23
wirkt $F_2$ bereits ?

ja   nein

24
$a_{q,1} < a_{q,Krit}$
und
$a_{q,2} < a_{q,Krit}$

nein

26
Unter-programm (Fig. 3)

ja

25
Bremskräfte $F_1$, $F_2$ aufheben und ABS-Schlupf-signale für die Kanäle 7, 8 freigeben

Ende — 27

# Fig. 3

Start — 30

$a_{q,1} > a_{q,Krit}$
und
$a_{q,2} > a_{q,Krit}$ — 31

nein

ja

Räder 4, 5, 6, 7, 8, 9 mit Bremskraft $F_1$ beaufschlagen und ABS-Schlupf-signale für Räder 7, 8 sperren. — 32

Unter-programm (Fig. 4) — 37

$V_7 + V_8 < K_1 * (V_4 + V_5)$
und
$d/dt (V_4 + V_5) < K_2$ — 33

nein

$a_{q,Krit} := a_{q,Krit} + K_3$ — 36

ja

Räder 4, 5, 6 mit Bremskraft $F_2$ beaufschlagen — 34

$a_{q,Krit} := a_{q,Start}$ — 35

Ende — 38

# Fig. 4

**Start** — 40

41

Bremskraft $F_1$ aufheben und ABS-Schlupfsignale freigeben.

42

$$a_{q,1} < a_{q,Krit} - K_4$$
und
$$a_{q,2} < a_{q,Krit} - K_4$$

nein

ja

43

$$a_{q,Krit} > K_5$$

nein

ja

44

$$a_{q,Krit} := a_{q,Krit} - K_6$$

45

**Ende**

Fig. 5

Fig. 5a

Fig. 5b

Fig. 5c

EP 1 142 768 B1